Europäisches Patentamt

European Patent Office

Office européen des brevets

(11) Publication number: **0 043 541**
**B1**

# EUROPEAN PATENT SPECIFICATION

(45) Date of publication of patent specification: **02.05.85**

(21) Application number: **81105060.8**

(22) Date of filing: **30.06.81**

(51) Int. Cl.⁴: **C 04 B 35/56, B 24 D 3/08, B 01 J 3/06, B 22 F 3/14, C 04 B 14/32**

(54) Process for production of a silicon carbide composite.

(30) Priority: **09.07.80 US 167196**

(43) Date of publication of application:
**13.01.82 Bulletin 82/02**

(45) Publication of the grant of the patent:
**02.05.85 Bulletin 85/18**

(84) Designated Contracting States:
**AT BE CH DE FR GB IT LI NL SE**

(56) References cited:
**EP-A-0 010 257**
**AU-D-5 373 879**
**CH-A- 502 872**
**GB-A-2 006 733**

(73) Proprietor: **GENERAL ELECTRIC COMPANY**
**1 River Road**
**Schenectady New York 12305 (US)**

(72) Inventor: **Ohno, John Michio**
**11650 McClumpha Road**
**Plymouth, Michigan (US)**

(74) Representative: **Sieb, Rolf, Dr. et al**
**Kaiserstrasse 41**
**D-6000 Frankfurt (Main) 1 (DE)**

Courier Press, Leamington Spa, England.

## Description

### Background of the invention

According to one embodiment the present invention relates to a process for preparing a bonded composite comprising:

(a) forming an integral bi-layered body, one layer of which comprises diamond crystals and non-diamond carbon and the other layer of which comprises at least non-diamond carbon,

(b) heating silicon to cause liquefaction and infiltration into both layers of said body and

(c) sintering said body and infiltrated silicon under conditions sufficient to produce a β-silicon carbide binder uniting said composite.

According to another embodiment the present invention relates to a process for preparing a bonded composite comprising:

(a) forming an integral bi-layered body, one layer of which comprises diamond crystals and non-diamond carbon and the other layer of which comprises at least non-diamond carbon,

(b) infiltrating both layers of said body with liquid silicon; and

(c) sintering said body and infiltrated silicon under conditions sufficient to produce a β-silicon carbide binder uniting said composite.

Such processes are described in AU—A—53,738/79. Said AU—A corresponds to EP—A—12 966 not being published before the priority date of the present application. In the following, however, it is referred to EP—A—12 966. According to the disclosure of said EP—A all kinds of elemental non-diamond carbon can be used without making any difference. Said EP—A does not mention specifically carbon black as a useful kind of elemental non-diamond carbon. According to said EP—A there can be used, instead of or together with the non-diamond carbon, an organic material to give non-diamond carbon after decomposition.

In the CH-A—502 872 there is described a method for making a metal-bonded diamond containing abrasive tool which is bonded to a metal substrate, whereby there is used a first heating step to sinter together the abrasive portion and the metal substrate and a second heating step to melt the bonding metal and to infiltrate said abrasive portion with said molten bonding metal.

Articles composed of materials having refractory characteristics, hardness and resistance to erosion have myriad important uses. Representative materials are described in U.S. Patent No. 2,938,807 of Andersen.

Reaction sintering of α-silicon carbide and β-silicon carbide has been known for making high temperature components. For example, β-silicon carbide is described as an excellent binder in the Andersen U.S. Patent No. 2,938,807, however, no diamond is incorporated in this silicon carbide technology.

Another useful component of these materials would be diamond. Its superior properties of, for example, hardness have long been appreciated. A satisfactory means of incorporating diamond into such articles would be of a significant advantage and such is an object of the processes of the present invention.

A metal is used to bind diamond crystals in U.S. Patent No. 4,063,909 to Robert D. Mitchell. Such metal may be, for example, Co, Fe, Ni, Pt, Ti, Cr, Ta and alloys containing one or more of these metals.

The above and other patents in the area of bonding diamond crystals depend on hot-press technology, as for example described in U.S. Patent No. 4,124,401 to Lee et al, U.S. Patent No. 4,167,399 to Lee et al, and U.S. Patent No. 4,173,614 to Lee et al, all of which patents are assigned to the assignee of the present invention.

### Introduction to the invention

The present invention employs diamond crystal; α-SiC, β-SiC or other filler crystals; carbon black; carbon fiber and paraffin to produce composite bodies with sintered diamond at the top as a thin, usually flat, surface layer.

The process of the present invention is more productive than the prior art of making diamond tools or wear components in that it involves:

(1) Room temperature pressing of diamond-incorporated composite to a desired shape, using high quality carbons and paraffin, without any use of other additives described in the prior art.

(2) Simple direct infiltration without use of metal or alloy substrate or wick material to guide infiltration. No pressure is applied to infiltrate, but a diffusion process is utilized.

(3) Shaping is greatly simplified because it is largely performed prior to in situ formation of binder by reaction between silicon and carbon.

The subject invention has a definite saving of time and material, such as diamond grinding wheel to produce a final shape. A drastic cost saving in machining abrasive materials is realized due to its excellent performance.

The one embodiment of the process according to the invention is characterized by the steps of:

(1) forming a first dispersion of said diamond crystals and carbon black in paraffin;

(2) forming a second dispersion of carbon fiber, carbon black and filler in paraffin;

(3) compacting said dispersions together to produce an integral bi-layer composite and

2

(4) subjecting said composite to a vacuum for a period of time at a temperature sufficient to vaporize essentially all of said paraffin.

The other embodiment of the process of the invention is characterized by the steps of:

(1) forming a first dispersion of said diamond crystals and carbon black in paraffin;

(2) forming a second dispersion of carbon fiber, carbon black and filler in paraffin;

(3) compacting said dispersions together to produce an integral bi-layer composite;

(4) placing said composite in direct contact with elemental silicon and

(5) subjecting said composite to a vacuum for a period of time at a temperature sufficient to vaporize essentially all of said paraffin, whereby for said infiltrating said silicon is heated in direct contact with said composite to cause liquefaction of said silicon.

As a result of these processes according to the invention a bonded composite having a superior wear resistance surface layer is produced. That diamond crystal containing surface, held tightly by a strong silicon carbide bonding matrix, is particularly suitable as a tooling or cutting edge.

Description of the drawings

In the drawings:

Fig. 1 is a schematic diagram of the process of the present invention; and

Fig. 2 depicts the results of comparative testing of sample insert composites of the present invention.

Description of the invention

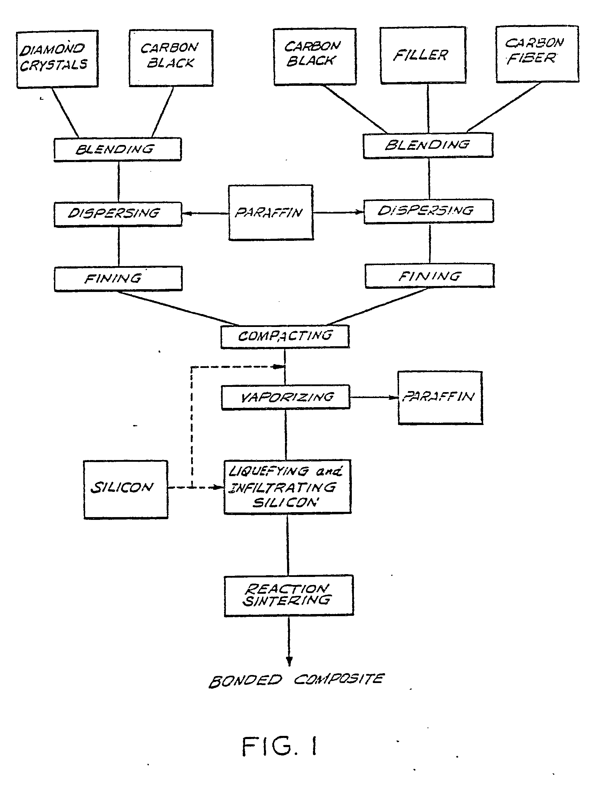

The present process for preparing silicon carbide composites is illustrated in Fig. 1. As shown by that diagram, one of the initial steps involves the formation of a dispersion of diamond crystals and carbon black in paraffin.

For various reasons, small crystals are usually employed in this first dispersion. In a preferred embodiment, the diamonds employed include crystals having a size less than about 0.037 mm (400 mesh). Crystals of this preferred size will, when bonded with β-silicon carbide, exhibit superior resistance to chipping. In addition, they provide sharp edges having desirable relief angles for cutting inserts and other wear components.

To the diamond crystals must be added carbon black. This carbon serves subsequently by reacting to yield β-silicon carbide for the bonding matrix of the present composites. This carbon black is desirably of high purity to reduce the presence of contaminents. In particular, its sulfur content should be low to avoid possible side reactions during subsequent processing. Although varying amounts of carbon black are permissible, from 1% to 3%, most preferably about 2%, by weight of diamond has proven optimum.

The paraffin utilized in the first dispersion may be any of the hydrocarbon waxes encompassed by the common meaning of this term. Again a high purity paraffin should be employed to avoid possible harmful residue. For ease of admixture, a liquid paraffin is employed. This may, however, be accomplished by operating under a temperature sufficiently high to melt a paraffin which is ordinarily solid under ambient conditions. The amount of paraffin employed is not critical as it is subsequently removed. It generally constitutes from 3% to 6% by total weight of the first dispersion.

The foregoing constituents may simply be mixed together to form the first dispersion. A very intimate and homogeneous dispersion is, however, preferred. Consequently, a step-wise technique such as that outlined in the flow diagram of Fig. 1 is desirable.

In accordance with that technique, the diamond crystals and carbon black are blended to permit an even coating of the crystal surfaces. Only after this step is the paraffin mixed into the blend. Thereafter, the first dispersion is preferably subjected to a further step of fining, as by grinding.

Formation of the second dispersion may be performed in the same manner as in formation of the first dispersion. However, after fining, the second dispersion or admixture containing carbon fiber, carbon black, and paraffin may be passed through a screen of, for example, about 0,84 mm (20 mesh) to reduce any agglomeration which may have occurred.

The paraffin and carbon black utilized in forming the second dispersion may be any of these previously described. For convenience, the same ones are ordinarily utilized in forming both the first and second dispersions. A high purity carbon black is again particularly important. Generally, the second dispersion also contains from 3% to 6% paraffin and 2% to 4% carbon black by weight.

The carbon fiber employed is desirably of very small size to facilitate homogenous admixture and, in particular, the fining operation. The sizes of fiber are preferably of from 6 to 30 microns (μm) in diameter, and 250 to 500 μm in length.

The filler is provided to increase bulk and also to improve the compressibility of the powder mix containing fiber. It is highly desirable for a number of applications. Although such a filler may comprise any material which is stable under the conditions to which it is subjected during sintering and use, fine β- or α-silicon carbide is preferred. Ordinarily, from 40 to 75% of filler by total weight of the second dispersion is employed. This range does not, of course, include the amount of β-SiC formed during the subsequent sintering step.

Once the two dispersions have been formed, they are compacted together to produce a bi-layer composite. This can be readily accomplished in a mold. A mold having the desired shape may, for example, be partially filled with one dispersion and then topped with the other. A plunger inserted into the opening

3

of the mold may then be utilized for compaction. The amount of pressure applied is usually at least 138 N/mm² (1400 kg/cm²) and desirably is from 167 to 226 N/mm² (1700 to 2300 kg/cm²).

There is no criticality in these steps. The thickness of the two layers may vary in conventional manner depending upon the application of the products. However, it is preferred to employ the two dispersions in a ratio such that the first, diamond-containing layer will be from 0.25 to 0.8 mm. in thickness for cutting inserts. It is also preferred that the layer be flat.

One thing of great importance in this operation is the shape of the mold. A significant advantage of the present invention lies in the fact that the shape impressed upon the composite during molding ordinarily need not be altered. Thus the time consuming and difficult finishing to a desired shape, common with other diamond-containing materials, may be eliminated in accordance with the present process. The mold should therefore have the configuration desired for the ultimate portion of the body to which the composite corresponds. Pressure compaction, even at room temperature, will provide the composite containing paraffin with sufficient "green strength" or physical stability to retain its imparted shape during subsequent operations.

Once molded to the desired shape, the composite is (as shown in Fig. 1) subjected to vacuum and temperature conditions sufficient to vaporize the paraffin from both of its layers. Suitable conditions are, of course, dependent upon the particular paraffin present. Generally, however, a pressure of less than $2{,}6 \cdot 10^{-4}$ bar 0,2 mmHg) and temperature of about 500°C are utilized. Alternatively, another temperature and correspondingly varied vacuum may be employed.

The vaporization of the paraffin is preferably conducted slowly. This avoids, for example, violent boiling and/or build-up of gaseous pressure within the composite. Accordingly, conditions requiring at least 10 minutes and preferably from 10 to 15 minutes for the essentially complete removal of the paraffin are preferred.

The remaining essential constituent for the present process is elemental silicon. Depending upon the apparatus employed during paraffin vaporization and/or subsequent steps, silicon may be brought into direct contact with the composite at different stages of the process, as long as it is present for infiltration. This option is shown in Fig. 1 through use of dashed lines indicating convenient stages for addition. Commonly, therefore, it is introduced immediately prior to paraffin vaporization. This allows vaporization and infiltration etc. to occur without interruption and in the same heating device. Silicon may, however, be added directly after the step of paraffin vaporization.

Silicon is then heated. This causes it first to liquefy and then to infiltrate the composite. These steps occur quickly and bring the silicon into intimate contact with the original carbon black and fiber constituents of the composite.

There must be sufficient elemental silicon present to permit, under the conditions of sintering, infiltration (or diffusion into) and reaction with substantially all of the carbon black and carbon fiber of the composite. There may also be excess silicon. It is not detrimental if, after sintering, a small amount of free silicon remains within the composite. Up to about 14% excess silicon is even desirable to ensure substantially complete reaction in both layers.

The operation of bonding the composite actually involves a series of steps, all of which may occur essentially simultaneously. These steps include melting of the silicon, infiltration of molten silicon into the composite and finally reaction of the silicon with both the carbon black and carbon fiber in the layers of the composite to produce β-silicon carbide.

To induce this last reaction between silicon and carbon, a minimum temperature of at least about 1450°C is required. Higher temperatures may also be utilized. A maximum of about 1500°C is, however, preferred to avoid graphitization of the diamond crystals. Normally the composite should be sintered at least 10 minutes at 1450°C. preferably about 30 minutes at 1450° to 1490°C is preferred. This ensures substantially complete reaction of available carbon black and carbon fiber with the silicon.

These temperatures are sufficiently high to ensure the molten silicon infiltrate into the composite. Consequently, the entire operation may proceed essentially simultaneously under a single set of conditions or in a sequential step-wise progression, as desired.

Remarkably, and in contrast to most prior art techniques, the process of the present invention does not require application of pressure during silicon infiltration or sintering. This, of course, means that there is no need for a hot press mold at this stage of the present process. Such other processes as are, for example, described in United States Letters Patent No. 4,124,401 of Lee et al, rely upon a pressure upwards of about 138 N/mm² (20,000 psi) for this portion of the process.

Once reaction between carbon black and carbon fiber with silicon in the composite has essentially ceased, the bonded product may be cooled. If, as desired, the composite was formed in the desired shape, it is ready for use. Most commonly, therefore, it will be configured as a cutting tool, wire drawing die, or other conventional article for which its properties are particularly desirable.

These bonded composites generally contain strata reflecting their process of production. In the main, the strata are evidenced by the filler of the second dispersion (or layer) and by the diamond crystals of the surface layer. Uniting these different strata is the bonding matrix of β-silicon carbide and, generally, some excess silicon. Thus, for example, if the filler of the second dispersion is α-silicon carbide, as preferred, that layer may consist essentially of α-silicon and β-silicon carbide with possible excess silicon. If the filler employed is β-silicon carbide, the main body will be essentially homogenous unless excess silicon is present.

The surface layer derived from the first dispersion ordinarily consists predominantly of diamond crystals and a small amount of β-silicon carbide. Most characteristic of this layer, is the presence of its diamond crystals, preferably in the range of from about 75% to 90% by weight.

A residue of unreacted constituents-generally from about 5% to 14% silicon and up to about 0.2% carbon by weight—may also exist in the second layer. The silicon residue may be present in both of the composite layers. However, residual carbon in the top layer is desirably less than 0.05% by weight.

The processes of this invention will be more fully described in, and better understood from, the following:

Example

Bonded composites were prepared as follows:

Firstly, diamond crystals having a size of less than about 0.037 mm (400 mesh) were homogeneously blended with carbon black; paraffin was mixed into the blend according to Table 1 set forth below and then the resultant admixture was finely ground.

TABLE 1—Mix for top layer (% by weight)

| Diamond of less than 0.037 mm (400 mesh) | 98% | | |
|---|---|---|---|
| | | Mix 95% | |
| Carbon Black | 2% | | (1) Top layer |
| Paraffin | | 5% | |

Secondly, powder mixture as set forth in Table 2 were blended together before being finely ground and sieved through a 0.84 mm (20 mesh) screen.

TABLE 2—Main body mix (% by weight)

| α or β SiC | 97% | | |
|---|---|---|---|
| Carbon Black | 3% | Mix 95% | (2) |
| Paraffin | | 5% | |
| | | | Mix |
| Carbon Fiber | 97% | | |
| Carbon Black | 3% | Mix 95% | (3) |
| Paraffin | | 5% | Sieved through 0.84 mm (20 mesh) screen |

The non-diamond containing admixture was employed to substantially fill the depression of a mold. On top of that admixture was placed a thin layer of the first, diamond-containing admixture. Then the mold contents were compacted under a conventional pressure to produce an integral bi-layer composite.

The composite was removed from the press mold and placed in contact with a small amount of elemental silicon inside a vacuum oven, as set forth in Table 3.

TABLE 3—(Unit: gram)

| Mix | Example A* | Example B* | |
|---|---|---|---|
| (1) | 0.27 | 0.24 | Top Layer |
| (2) | 0.23 | 0.20 | Main Body |
| (3) | 0.08 | 0.069 | |
| Si | 0.345 | 0.30 | |

*Weight depends on shape, size, total thickness, layer thickness, and relief angle of an insert and also on grade.

The oven was brought to a temperature of 500°C and pressure of less than $2{,}6 \cdot 10^{-4}$ bar (0,2 mmHg) for 10 minutes to vaporize its content of paraffin. The temperature of the oven was then raised to 1480°C to cause the silicon to liquefy and completely infiltrate the composite. This temperature was maintained for 30 minutes to further allow essentially complete reaction of the silicon with the carbon black and fiber within the composite. Thereafter the oven was cooled to room temperature to allow removal of the bonded composite.

The sample composites of this process were each in the form (identical to that of the mold depression) of a 1/2 inch (12,7 mm) square, positive insert having a 1/32 inch (0,79 mm) nose radius and a 5° relief. Two of these samples (denominated test samples A and A[1]) were comparatively tested against similarly shaped tungsten carbide inserts, and commercial polycrystalline diamond inserts. The tests involved turning a 390 aluminum alloy using a depth of cut of 0.010 inches (0,254 mm) and a feed rate of 0.002 in (0,05 mm) revolution without using coolant until the insert showed a wear of 0.015 inch (0,4 mm), (i.e., the end of its effective tool life).

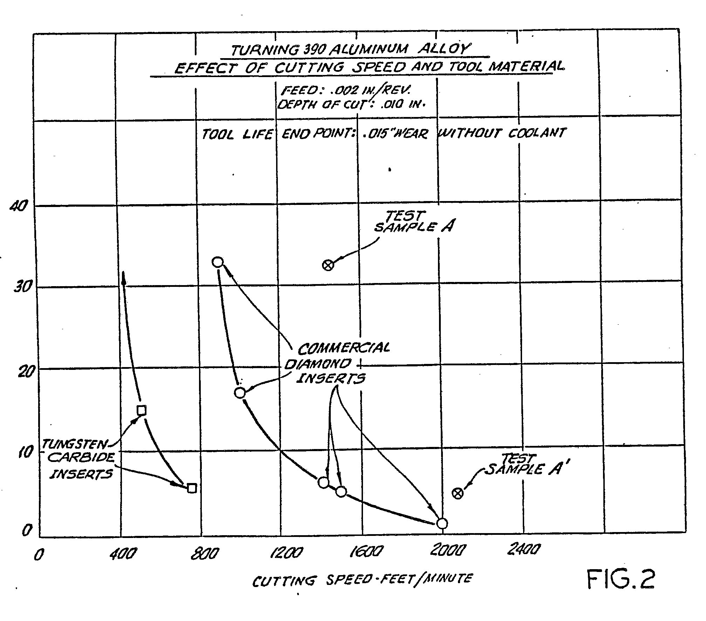

The results of the tests are depicted in Fig. 2 as a function of cutting speed. As shown by Fig. 2, the samples (A and A[1]) obtained according to the process of the present invention permit significantly higher speeds of use for a given tool life time and significantly lengthened life times for a given speed of use. This indicated they also possess superior physical hardness and/or stability.

## Claims

1. A process for preparing a bonded composite comprising:

(a) forming an integral bi-layered body, one layer of which comprises diamond crystals and non-diamond carbon and the other layer of which comprises at least non-diamond carbon,

(b) heating silicon to cause liquefaction and infiltration into both layers of said body and

(c) sintering said body and infiltrated silicon under conditions sufficient to produce a β-silicon carbide binder uniting said composite, characterized in that said forming an integral bi-layered body comprises:

(1) forming a first dispersion of said diamond crystals and carbon black in paraffin;

(2) forming a second dispersion of carbon fiber, carbon black and filler in paraffin;

(3) compacting said dispersions together to produce an integral bi-layer composite and

(4) subjecting said composite to a vacuum for a period of time at a temperature sufficient to vaporize essentially all of said paraffin.

2. The process of Claim 1, wherein the carbon black of the first dispersion comprises between 1% and 3% by weight of the diamond crystals.

3. The process of Claim 2, wherein the first dispersion is formed by mixing the carbon black and the diamond crystals and then incorporating from 3 to 6% of paraffin by total weight.

4. The process of Claim 3, wherein the second dispersion comprises from 3 to 6% of paraffin by total weight.

5. The process of Claim 3, wherein the filler comprises from 40 to 75% β-silicon carbide by weight of the second dispersion.

6. The process of Claim 3, wherein the filler comprises from 40 to 75% α-silicon carbide by weight of the second dispersion.

7. The process of Claim 5, wherein sintering is performed in a vacuum at a temperature below about 1500°C.

8. The process of Claim 7, wherein the sintered composite contains between about 5 to 14% free silicon by total weight.

9. The process of Claim 8, wherein the diamond crystals are of a size less than 0.037 mm (400 mesh).

10. The process of Claim 6 wherein sintering is performed in a vacuum at a temperature below about 1500°C.

11. The process of Claim 10, wherein the body contains between about 5 to 14% free silicon by total weight.

12. The process of Claim 11, wherein the diamond crystals are of a size less than 0.037 mm (400 mesh).

13. A process for preparing a bonded composite comprising:

(a) forming an integral bi-layered body, one layer of which comprises diamond crystals and non-diamond carbon and the other layer of which comprises at least non-diamond carbon,

(b) infiltrating both layers of said body with liquid silicon; and

(c) sintering said body and infiltrated silicon under conditions sufficient to produce a β-silicon carbide binder uniting said composite, characterized in that said forming an integral bi-layered body comprises:

(1) forming a first dispersion of said diamond crystals and carbon black in paraffin;

(2) forming a second dispersion of carbon fiber, carbon black and filler in paraffin;

(3) compacting said dispersions together to produce an integral bi-layer composite;

(4) placing said composite in direct contact with elemental silicon and

(5) subjecting said composite to a vacuum for a period of time at a temperature sufficient to vaporize essentially all of said paraffin, whereby for said infiltrating said silicon is heated in direct contact with said composite to cause liquefaction of said silicon.

## Patentansprüche

1. Verfahren zum Herstellen eines gebundenen Verbundwerkstoffes durch

(a) Bilden eines integralen Zweischichtkörpers, dessen eine Schicht Diamantkristalle und nicht-

# 0 043 541

diamantartigen Kohlenstoff und dessen andere Schicht zumindest nicht-diamantartigen Kohlenstoff umfaßt,

(b) Erhitzen von Silizium, um es zu verflüssigen und in beide Schichten des genannten Körpers zu infiltrieren, und

(c) Sintern des das infiltrierte Silizium enthaltenden genannten Körpers unter Bedingungen, die ausreichen, um einen β-Siliziumkarbidbinder zu erzeugen, der den Verbundwerkstoff bindet, dadurch gekennzeichnet, daß das Bilden eines integralen Zweischichtkörpers umfaßt:

(1) Herstellen einer ersten Dispersion aus Diamantkristallen und Ruß in Paraffin,

(2) Herstellen einer zweiten Dispersion aus Kohlenstofffasern, Ruß und Füllstoff in Paraffin,

(3) Zusammenpressen der Dispersionen zur Bildung eines integralen Zweischicht-Verbundwerkstoffes und

(4) Aussetzen des erhaltenen Verbundwerkstoffes gegenüber einem Vakuum für eine Dauer und bei einer Temperatur, die ausreichen, um im wesentlichen das gesamte Paraffin zu verdampfen.

2. Verfahren nach Anspruch 1, dadurch gekennzeichnet, daß der Ruß der ersten Dispersion zwischen 1 und 3 Gew.-%, bezogen auf die Diamantkristalle, umfaßt.

3. Verfahren nach Anspruch 2, dadurch gekennzeichnet, daß die erste Dispersion durch Vermischen des Rußes und der Diamantkristalle und dem nachfolgenden Einarbeiten von 3 bis 6% Paraffin, bezogen auf das Gesamtgewicht, gebildet wird.

4. Verfahren nach Anspruch 3, dadurch gekennzeichnet, daß die zweite Dispersion 3 bis 6% Paraffin, bezogen auf das Gesamtgewicht, umfaßt.

5. Verfahren nach Anspruch 3, dadurch gekennzeichnet, daß der Füllstoff von 40 bis 75% β-Siliziumkarbid, bezogen auf das Gewicht der zweiten Dispersion, umfaßt.

6. Verfahren nach Anspruch 3, dadurch gekennzeichnet, daß der Füllstoff von 40 bis 75% α-Siliziumkarbid, bezogen auf das Gewicht der zweiten Dispersion, umfaßt.

7. Verfahren nach Anspruch 5, dadurch gekennzeichnet, daß das Sintern in einem Vakuum bei einer Temperatur unterhalb von etwa 1500°C ausgeführt wird.

8. Verfahren nach Anspruch 7, dadurch gekennzeichnet, daß der gesinterte Verbundwerkstoff zwischen etwa 5 und 14% freies Silizium, bezogen auf das Gesamtgewicht, enthält.

9. Verfahren nach Anspruch 8, dadurch gekennzeichnet, daß die Diamantkristalle eine Größe von weniger als 0.037 mm (400 Maschen) haben.

10. Verfahren nach Anspruch 6, dadurch gekennzeichnet, daß das Sintern in einem Vakuum bei einer Temperatur unterhalb von etwa 1500°C ausgeführt wird.

11. Verfahren nach Anspruch 10, dadurch gekennzeichnet, daß der Körper zwischen etwa 5 und 14% freies Silizium, bezogen auf das Gesamtgewicht, enthält.

12. Verfahren nach Anspruch 11, dadurch gekennzeichnet, daß die Diamantkristalle eine Größe von weniger als 0.037 mm (400 Maschen) haben.

13. Verfahren zum Herstellen eines gebundenen Verbundwerkstoffes durch

(a) Bilden eines integralen Zweischichtkörpers, dessen eine Schicht Diamantkristalle und nicht-diamantartigen Kohlenstoff und dessen andere Schicht zumindest nichtdiamantartigen Kohlenstoff umfaßt,

(b) Infiltrieren beider Schichten des genannten Körpers mit flüssigem Silizium und

(c) Sintern des das infiltrierte Silizium enthaltenden genannten Körpers unter Bedingungen, die ausreichen, um einen β-Siliziumkarbidbinder zu bilden, der den Verbundwerkstoff bindet, dadurch gekennzeichnet, daß das Bilden eines integralen Zweischichtkörpers umfaßt:

(1) Herstellen einer ersten Dispersion aus Diamantkristallen und Ruß in Paraffin,

(2) Herstellen einer zweiten Dispersion aus Kohlenstofffasern, Ruß und Füllstoff in Paraffin,

(3) Zusammenpressen der Dispersionen unter Bildung eines integralen Zweischicht-Verbundwerkstoffes,

(4) Anordnen des Verbundwerkstoffes in direktem Kontakt mit elementarem Silizium, und

(5) Aussetzen des Verbundwerkstoffes gegenüber einem Vakuum für eine Dauer bei einer Temperatur, die ausreichen, im wesentlichen das gesamte Paraffin zu verdampfen.

**Revendications**

1. Procédé de préparation d'un composite lié comprenant:

(a) la formation d'un élément à deux couches, d'un seul tenant, dont une couche se compose de cristaux de diamant et de carbone qui n'est pas sous la forme diamant, et dont l'autre couche se compose, au moins, de carbone qui n'est pas sous la forme diamant,

(b) le chauffage de silicium pour provoquer sa liquéfaction et son infiltration dans les deux couches de l'élément, et

(c) le frittage de l'élément et du silicium qui s'y est infiltré dans des conditions suffisantes pour produire un liant de carbure de silicium-β qui unit le composite, caractérisé en ce que la formation d'un élément à deux couches, d'un seul tenant, comprend:

(1) la formation d'une première dispersion des cristaux de diamant et de noir de carbone dans de la paraffine;

7

(2) la formation d'une second dispersion de fibres de carbone, de noir de carbone et d'une charge dans de la paraffine;

(3) le compactage des deux dispersions ensemble pour produire un composite à deux couches, d'un seul tenant et

(4) la mise du composite sous vide pendant une période de temps, à une température suffisante pour vaporiser essentiellement en totalité la paraffine.

2. Procédé selon la revendication 1, caractérisé en ce que le noir de carbone de la première dispersion représente entre 1% et 3% en poids des cristaux de diamant.

3. Procédé selon la revendication 2, caractérisé en ce qu'on forme la première dispersion en mélangeant le noir de carbone et les cristaux de diamant, puis en incorporant de 3 à 6% de paraffine, par rapport au poids total.

4. Procédé selon la revendication 3, caractérisé en ce que la seconde dispersion comprend de 3 à 6% de paraffine par rapport à son poids total.

5. Procédé selon la revendication 3, caractérisé en ce que la charge est constituée par de 40 à 75% de carbure de silicium-β, exprimés par rapport au poids de la second dispersion.

6. Procédé selon la revendication 3, caractérisé en ce que la charge est constituée par de 40 à 75% de carbure de silicium-α, exprimés par rapport au poids de la seconde dispersion.

7. Procédé selon la revendication 5, caractérisé en ce qu'on met en oeuvre le frittage sous vide à une température inférieure à environ 1500°C.

8. Procédé selon la revendication 7, caractérisé en ce que le composite fritté contient d'environ 5 à 14% de silicium élémentaire, par rapport à son poids total.

9. Procédé selon la revendication 8, caractérisé en ce que les cristaux de diamant présentent une taille inférieure à 0,037 mm (400 mesh).

10. Procédé selon la revendication 6, caractérisé en ce qu'on met en oeuvre le frittage sous vide à une température inférieure à environ 1500°C.

11. Procédé selon la revendication 10, caractérisé en ce que l'élément contient entre environ 5 et 14% de silicium élémentaire, par rapport à son poids total.

12. Procédé selon la revendication 11, caractérisé en ce que les cristaux de diamant présentent une taille inférieure à 0,037 mm (400 mesh).

13. Procédé de préparation d'un composite lié comprenant:

(a) la formation d'un élément à deux couches, d'un seul tenant, dont une couche se compose de cristaux de diamant et de carbone qui n'est pas sous la forme diamant, et dont l'autre couche se compose, au moins, de carbone qui n'est pas sous la forme diamant;

(b) l'infiltration de silicium liquide dans les deux couches de l'élément; et

(c) le frittage de l'élément et du silicium qui s'y est infiltré dans des conditions suffisantes pour produire un liant de carbure de silicium-β qui unit le composite, caractérisé en ce que la formation d'un élément à deux douches, d'un seul tenant, comprend:

(1) la formation d'une première dispersion des cristaux de diamant et de noir de carbone dans de la paraffine;

(2) la formation d'une second dispersion de fibres de carbone, de noir de carbone et d'une charge dans de la paraffine;

(3) le compactage des deux dispersions ensemble pour produire un composite à deux couches, d'un seul tenant;

(4) la mise du composite en contact direct avec du silicium élémentaire et

(5) la mise du composite sous vide pendant une période de temps, à une température suffisante pour vaporiser essentiellement en totalité la paraffine, sachant que, pour l'infiltration, on chauffe le silicium en contact direct avec le composite pour provoquer la liquéfaction du silicium.

FIG. 1

**TURNING 390 ALUMINUM ALLOY**
**EFFECT OF CUTTING SPEED AND TOOL MATERIAL**

FEED: .002 IN./REV.
DEPTH OF CUT: .010 IN.

TOOL LIFE END POINT: .015" WEAR WITHOUT COOLANT

TEST SAMPLE A

COMMERCIAL DIAMOND INSERTS

TUNGSTEN CARBIDE INSERTS

TEST SAMPLE A'

CUTTING SPEED - FEET/MINUTE

FIG.2